# EUROPEAN PATENT SPECIFICATION

(11) **EP 3 780 378 B1**
(45) Date of publication and mention of the grant of the patent: **07.12.2022**
(21) Application number: 19020471.9
(22) Date of filing: 13.08.2019
(51) Int. Cl.: H02P 1/42

(54) **RESISTIVE SOFT STARTER FOR ELECTROMOTOR**
RESISTIVER WEICHSTARTER FÜR ELEKTROMOTOR
DÉMARREUR PROGRESSIF RÉSISTIF POUR ÉLECTROMOTEUR

(43) Date of publication of application: 17.02.2021
(73) Proprietor: Davoodabadi, Gholamabbas, Tehran (IR)
(72) Inventor: Davoodabadi, Gholamabbas, Tehran (IR)
(74) Representative: Patentgruppen A/S

(56) References cited:
- EP-A1- 1 901 891
- EP-B1- 1 901 891
- WO-A1-2018/150240
- JP-A- 2018 133 868

## Description

### TECHNICAL FIELD OF INVENTION:

The present invention is related to electronics field, and it is a device to start the electromotors in a soft gradual way.

### PRIOR ART:

For the first time, a person named Frank Nola invented soft starters because the primary shock (stress) with high startup amp in starting the electromotors was always a big problem and could cause the engine and its related equipments become kaput and its repair was costly. Currently, soft starters are invented in different kinds including frequency, transformer, voltage-reduction soft starters and inverters for energy conservation during consumption and protection of the invented machinery and equipment and all are in use, each of which has its own disadvantages. Frequency soft starters are expensive in terms of production and lead to energy dissipation in thermal manner as frequency change leads to soft start and they produce heat and they consume energy themselves. Also, inverters should be kept under special condition and they also consume energy. Some of prior arts registered in the field are as follows:

The invention with EP1901891B1 patent No. registered in European patent office with previous records, including a published patent in USA with US698233P and US788444P patent No. that presented by Black & Decker company named soft start system for a powerful device, Some methods are provided for soft starting these type of device, including exist of the coil's starter in series with the ability to be added to stator's coil in series or out of the generator.

The same invention with CN205945566U patent No. presented in China is a type of controlling motor starter cabinet.

The invention with publication number of US6351113 B1 in 2000 under the title of "Integrated Soft Starter in USPTO which is in fact a kind of incorporated soft starter for electric motors in which the power switch of the starter is clamped between a pair of bus bars in an offset manner to accommodate a discrete switching relay mounted in an inverted manner between the line input and bus bar in communication with load output. The current, when in a motor run mode, is shunted away from the solid state power switching device and through the switching relay, a substantially linear current path is achieved to reduce power loss and heat buildup. The arrangement allows for a heat sink mounted to one of the bus bars with adequate spacing between the heat sink and the discrete relay for insertion of a cooling fan. Current sensing is achieved with a Hall Effect sensor mounted to the bus bar in a small current sensing region that is created by having a pair slots in the bus bar to direct current. A pair of magnetic pins extended perpendicular from the bus bar to create the magnetic flux for the Hall Effect sensor to sense current flow through the current sensing region. The Hall Effect sensor circuit board also contains a thermostat which is mounted with adequate insulation yet in thermal communication with the bus bar.

The next similar invention under publication number of US9160257 B2 in 2013 is "Soft Starter system and method of operating same" registered in USPTO. The invention is a system and method for automatically defining and tuning operating parameters for a motor control device electrically connectible to an AC motor and a controller that is programmed to define a motor start-up function based on a rated current of the motor, the motor start-up function comprising an initial torque factor and an initial ramp time. The controller also triggers switching devices of the motor according to the motor start-up function to inject current into the motor during a first trial run, monitors operating conditions of the motor and motor control device during the first trial run, modifies the motor start-up function based on the monitored operating conditions, and triggers the plurality of switching devices according to the modified motor start-up function to inject current into the motor during the subsequent trial run.

In previous inventions and also in existing technologies either by the input power switching system in electromotor using control cabinets or by putting some coils in series, attempted to soft starting of electromotors. In cases that coil divided into parts and only one part enters into circuit as a part of series coil, that part is more likely to be damaged.

WO 2018/150240 A1 discloses a soft start electromotor wherein the normal single main coil is divided into two main coils by halving the cross section of the coil wires. By applying the two half-cross-section main coils in series during startup the motor gets a soft start. After a predetermined time, the two main coils are coupled in parallel to resemble the normal single main coil.

### CURRENT PROBLEMS AND THE PURPOSE OF PRESENT INVENTION:

Nowadays, electromotors are employed in different fields and energy conservation and due protection thereof is a subject worthy of attention. The technical problem lies with the initial startup of electromotors which require big current inrush, which accordingly results in sometimes uncontrollable shock and causes damage to the different parts or even the electromotor itself.

Currently, soft starters of different kinds, including frequency, voltage reduction, and transformer starters and inverters are used to prevent energy dissipation, electromotor protection and the removal of stress (shock) to electromotor in startup, each of which has got its own drawbacks. Inverters have got primary expenses and particular conditions of maintenance should be provided. Soft starters also and the existing inverters consume energy. For instance, frequency soft starters which bring about soft start by frequency change produce considerable heat for the existence of electronic pieces and cause high energy consumption. On the other hand, the use of frequency soft starters is expensive and they themselves also consume energy.

The present invention is a new method for resolving the mentioned problems and drawbacks such as reducing the initial startup stress (shock) of electromotor, which in turn leads to energy conservation and is also cheaper. The purposes of the invention of the resistive soft start except for the points mentioned above, are as follows:
1- Soft startup and removal of initial stress (shock) of electromotor in initial start which renders different parts intact and eventually longevity of electromotor.
2- Energy conservation: For instance, if motor start ampere is nominal 4, for initial operation the required ampere is 12 whereas in the present invention it reduces to 5/5 for initial operation.
3- In the present invention, electromotor starts and turns off successively with being damaged because of the operation method of electromotor which started in resistive soft start mode.
4- This does not include a considerable cost and is cost-effective as inverter and soft starter purchase is not required.

### DESCRIPTION OF THE INVENTION:

The invention relates to a resistive soft start electromotor comprising a timer and a contactor and two main coils of electromotor, wherein the timer and contactor are arranged to, at the start of the electromotor's movement, enter the second main coil in series during the start process, then enter the second main coil in parallel.

The invention is characterized in that the first and second main coils have half the wire diameter than a single main coil thereby increasing coil resistance causing less ampere to pass through the stator during the start process and applying less electrical load on net via electromotor and minimizing probability of stator winding damage during operation due to higher resistance in series coupling.

The inventive method of the invention is the employment of resistive soft start electromotor (soft operation) instead of the existing soft starters such that the initial coil resistance change can reduce the initial shock (stress) entering the electromotor. In this starter, no heat is produced which causes the energy waste by heat. It is noteworthy that inverters and existing soft starts are separate devices which are connected to machineries and cause soft start, for the preparation of which a great amount of expenses should be covered so they could be attached to related device and machinery whereas this invention has a very low expense and does not consume energy and creates the resistance by changing electromotor coil and brings about the soft start. In fact, there exists no need to buy soft starter or inverter. This method removes the expenses of these devices' purchase. We had better mention that this design is appropriate for almost 80% of electromotors. Resistive soft starter of electromotors (soft start operation) creates resistance by changing coil design itself instead of frequency change, and the electromotor starts operating with low speed. When it obtained 60 to 80 percent of its own RPM (revolutions per min), the system disconnects the resistance with the help of contactor and timer from the circuit and put the electromotor in a normal condition. Design calculations for all the electromotors follow the similar rule. The system of the rule starts by series electromotor and continues in parallel mode after two to three seconds under normal conditions of the engine. As to the AC motor, for changing the electromotors from simple to resistive soft start mode, main coins of copper wire's cross section are divided and no change is made in RPM. Thus, main resistance increases by two times. This system returns to the main circuit by the contactor. In electromotors of compressors and pumps and electromotors of other applications, an installation of part for preliminary control can cause soft start. It had better be mentioned that this plan has been tested in single-phase and double-phase centrifugal pumps

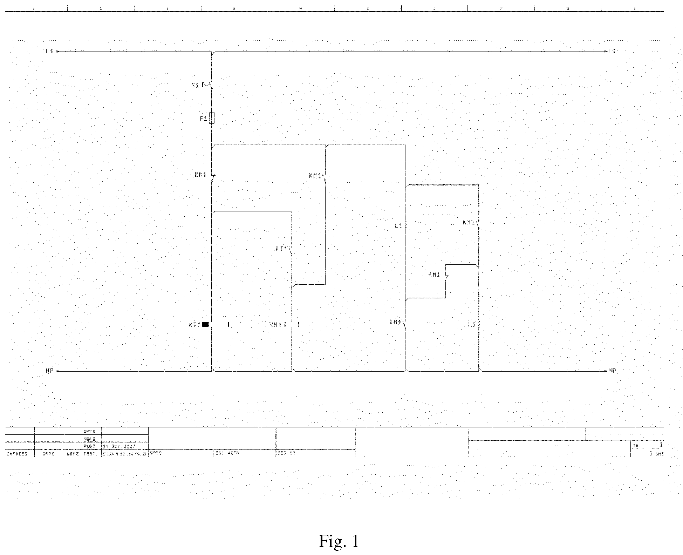

### Part 1: Single-phase Soft Starter Description (Fig. 1)

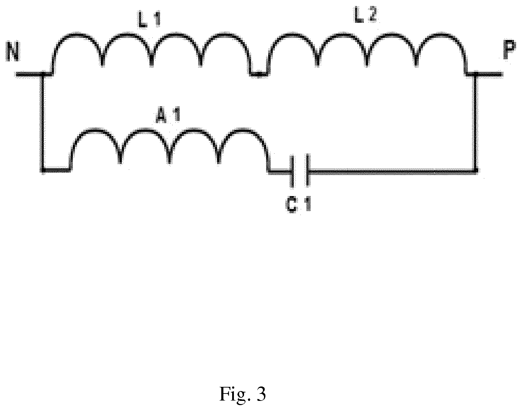

1) The Components of Circuit: Single-phase switch (Fig. 3) for connecting or disconnecting main electric current
2) Fuse F1 for circuit protection
3) Timer KT1, for enforcing basic time of soft start
4) Contactor KM 1, which plays the main role in primary start in series and later parallel mode.
5) Main coil of electromotor L1
6) Main coil of electromotor L2

### B) Circuit Operation Mode:

By main electric fuse switch(Fig. 3), the current first passes through the main coil L1 and permanent contact of connection. (6^{th} column, Figures number 5) and then the main coil (L2). Hence, as the coils are positioned in a series mode and the division of input voltage, the start will be in soft style. Also, the other path of the electric connection by permanent contact KM1 is through (the third column of the figures) is in the path of timer KT 1 which triggers the operation of the timer. After the adjusted time of the timer passes by (for low-power electromotors, this time is 5 seconds) Contact KT1 path (the fourth column of the figures) becomes closed and accordingly the coil of contactor KM1 starts operating which in turn leads to the unlocking of closed KM1 and closing of the open ones (In the third, fourth and seventh columns of the figures). As a result, main coils of L1 and L2 become parallel and all the voltage input power is for two main coils (This happens when electromotor has been started)

Moreover, after timer KT1 operates, the closed KM1 blade (in the third column of figures) opens and the timer is disconnected from the circuit. For complete disconnection of circuit, it suffices that the main incoming switch (Fig. 3) is turned off.

Furthermore, the similar system is applicable for three-phase electromotors.

Second Part:
The complete Description of electromotor preparation:
The specifications of Stator coil:
The inner diameter of applied core: 55 mm
The outer diameter of the applied core: 110 mm
Height: 70 mm

Main coil:
Wire diameter (wound in two-ply format): 0.56 mm
Times of Revolution: 40 42 43 43

Start Winding:
The diameter of wire (wound in single-ply format): 0.56 mm
Times of Revolution: 80 80

### The Technology of Development:

1-The specified stator with respect to engine power is mounted in aluminum crust.
2-The electromotor shaft is mounted in a central rotor hole by hydraulic press.
3- Ball bearings are mounted on shafts.
4- Mounting the engine cap at the end of electromotor shell
5- The application of 4 six-millimeter screws, they are screwed down for 1.5 centimeters on the engine shell
6- Mounting the prepared shaft inside the motor shell and shaft ball bearing in the lower door.
7- Mounting the upper door on the engine
8- The application of four six-millimeter screws of 1.5 centimeters long. Screws are driven into the engine shell for 1.5 centimeters.
9- The installation of terminal upon the engine shell
10-The installation of the capacitor in the specified position and wiring the wires in the due terminal
11- Engine test (Electrical and Earth power test)
12- Mounting the chilling impeller at the end of the engine
13- Mounting and installation of the protection for chilling impeller by 4 five-millimeter screws,
14- Final control of the engine
15- Closing the terminal gate of the engine
16-The installation of engine stands under the shell

This resistive soft start electromotor (soft startup), can be applied with respect to 80% electromotors and compressors and pumps which are employed for different usages. Resolving the rush-in current primary shock leads to the longevity of electromotors, which causes more energy conservation, is cost-effective and available.

As design calculations for all the electromotors follow the same law, the system of this law starts with series electromotors , and operates after two to three seconds under normal conditions of the engine.

### BRIEF DESCRIPTION OF FIGURES:

Figure number one: Single-phase Soft Starter Circuit
Figure number two: Single-phase normal coil electromotor
Figure number three: Soft start special coil for single-phase copper wire cross section
Figure number four: Switching primary coil after two seconds to normal condition (single phase)
Figure number five: Normal coil for triple-phase electromotor
Figure number six: Soft starter coil system and wiring position in triple-phase motor
Figure number seven: Wiring and switching mode of winding in triple-phase motor after startup
Figure number eight: Schematic of centrifugal electropump
Figure number nine: Explosive figure of electropump

### THE CLEAR EXPRESSION OF THE ADVANTAGES OF THE

### INVENTION:

The advantage of resistive soft starter in comparison to other soft starters:
- In a resistive soft start system of electromotor,(soft starter), the possibility of the system being defunct borders on zero for the application of coiled electromotor and it can consecutively turns on and off under difficult conditions.
- The drastic decrease of the damages to the electromotor and its pieces caused by mechanic blows in startup and accordingly the longevity of the electromotor and its constituent parts
- The low expenses of it which reduces to one-twentieth in low-power electromotors and one-hundredth in high-power electromotors
- In resistive soft start electromotor, there is no excessive part and electromotor control system does not change, and exist on all boards of electromotor control.
- Energy dissipated in soft starters and inverters is saved in the resistive soft starter.
- The reduction of electromotor power for preventing electrical shock leads to its longevity.

### THE DESCRIPTION OF AT LEAST ONE EXECUTIVE METHOD OF EMPLOYING THE INVENTION:

The present invention is able to be used in up to 80% of the electromotors. However, we hereby describe its application in centrifugal pumps.

The Employment of Resistive Soft Starter in the construction of steel centrifugal pump:
The Specifications of Stator Coil:
The Applied Core:
Internal Diameter: 55 mm
External Diameter: 110 mm

Main Coil:
The wire Diameter: (WOUND IN TWO-PLY FORMAT): 56 MM
   56MM
Times of Revolution: 40 42 43 43

Start Coil:
Wire Diameter (wound in single-ply format): 0.56 mm
Times of Revolution: 80 80

### The Required materials:

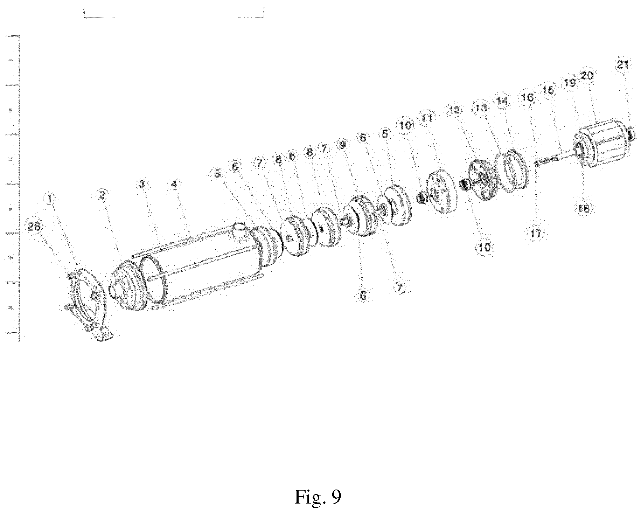

Two fixing stands of pump, one steel pipe of internal crust, four 8-millimeter stud bolts, 8 eight-millimeter nuts, three steel bushings , two mechanical seals, two cylindrical rings, one shaft, One flat bearing, triple multi-core wire, two steel head pumps, O-ring, one stator as explained above, one rotor as explained above, 6204 ball bearing, 6203 ball bearing, ten 6-millimeter bolt of 1.5 centimeter long , two spring rings, O-ring for cable , 100 cc edible paraffin wax, 4 impellers, countersunk screws , eight Allen screws, one steel pipe of external crust of pump, 5 diffusers, cable socket
1- Three-ply cable is tied by O-ring cable of number 25(Fig. 9) upon part 24(Fig. 9) (steel head pump) which is sealed by cylindrical O-ring inside gland.
2- Mounting PVC O-rings on parts 22(Fig. 9) (two), 23, 12, 3(Fig. 9) (two)
3- Mounting motor (specific stator or coil) inside steel pipe of number 22 (inner crust) (Fig. 9)
4- After machining, the steel shaft of number 15(Fig. 9) is mounted by hydraulic press inside central rotor hole of number 20(Fig. 9)
5- Mounting ball bearings of number 21 and 18 (Fig. 9)(ball bearings 6203 and 6204) on shaft of number 15(Fig. 9)
6- Mounting the aluminum ring of number 14(Fig. 9) and spring ring of number 13(Fig. 9) and aluminum mechanic seal position of number 12(Fig. 9) inside steel pipe of number 22(inner crust)(Fig. 9)
7- Mounting the prepared steel shaft inside the stator towards mechanical seal position of number 12(Fig. 9)
8- Mounting the second piece of number 14(aluminum ring) (Fig. 9), second spring ring of number 13(Fig. 9) from above inside the steel pipe of number 22(Fig. 9)
9- The ball bearing position of number 23(Fig. 9) is mounted in upper section of steel pipe(22) (Fig. 9)
10- The installation of cable sockets (input electricity and earth) to capacitor and engine socket
11- The assembled engine undergoes electrical and earth power test.
12- Mounting mechanical seal of number 10(Fig. 9) in mechanical seal of steel shaft of 16 mm
13- Mounting steel part of number 11 (Fig. 9) (steel mechanical seal position) on part number 12(Fig. 9)(aluminum mechanical seal)
14- Mounting mechanical seal of number 10(Fig. 9) upon part number 11(Fig. 9)
15- Sealing test by vacuum device
16- 100 cc of edible paraffin wax is injected to mechanical seal after sealing test
17- Mounting diffuser of number 5(Fig. 9)
18 Mounting impeller of number 6(Fig. 9) together with part number 9(Fig. 9) (water outlet diffuser)
19- Mounting inter-impeller bearing of number 7(Fig. 9) and impellers number 6(Fig. 9) and diffusers to number 8(Fig.9) respectively according to the provided schematic in figures
20- Mounting second part number 5 (simple diffuser) in upper section of the pump
21- Securing all the bearings and impellers and diffusers by steel screw M8 of number 17(Fig. 9) on shaft head.
22- Mounting stand of number one(Fig. 9) from motor cable.
23- Positioning the steel pipe of number 3(Fig. 9) (external shell of pump) in engine stand.
24- Fixing four stud bolts of M8 to number 4 in engine stand (Fig. 9)
25- Mounting steel part of number 2 (water inlet) on external shell(Fig. 9)
26- Mounting number 1 stand in upper section of pump upon part number 2(Fig. 9)
27- Securing stud bolts by nuts of M8 to number 26(Fig. 9)
28- Assembled pump undergoes tests regarding pumping capacity and other ones (control test)

As a result, shock of rush-in current reduced considerably by the application of resistive soft start. In Ac motor, cross section of copper wire is divided into two to change the simple electromotors to resistive soft start electromotors and as a result the times of revolutions do not change. Thus, the main resistance increases by two times more. This system returns to the main circuit by contactor. Around 80% of electromotors can start up with lower power in basic startup.

This single-phase circuit is tested by resistive soft start electromotor.

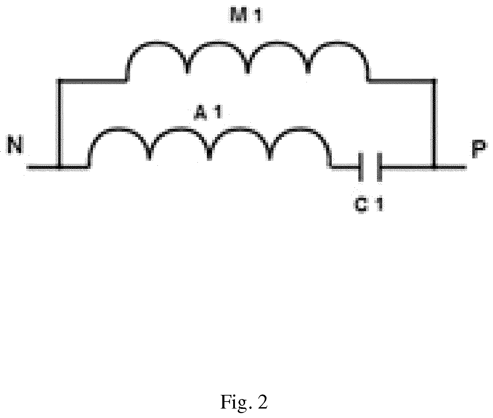

The first example is a normal coil for an electromotor with system of single-phase circuit capacitor (Fig. 2)

Coiled circuit for circuit startup (Fig. 3)

Changing simple coil to resistive soft start for copper wire cross section Coil circuit with capacitor (Parallel circuit)

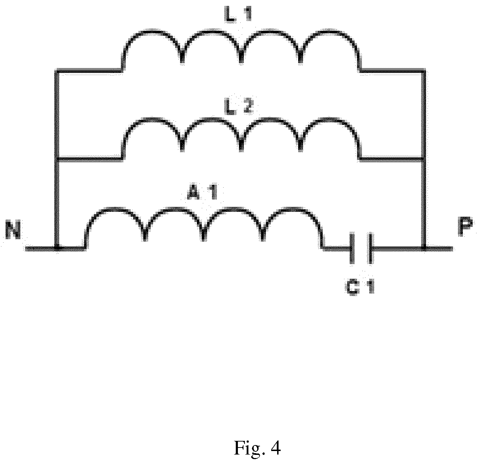

After two seconds, it switches to (Fig. 4) circuit which is a parallel circuit: (Fig. 4)

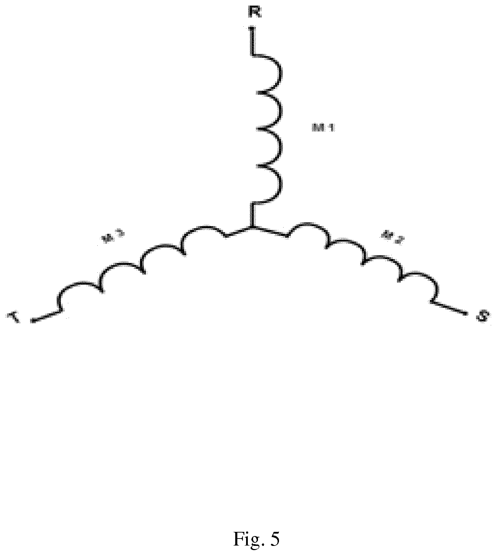

The second example: Simple coil for three-phase circuit electromotor (Fig. 5)

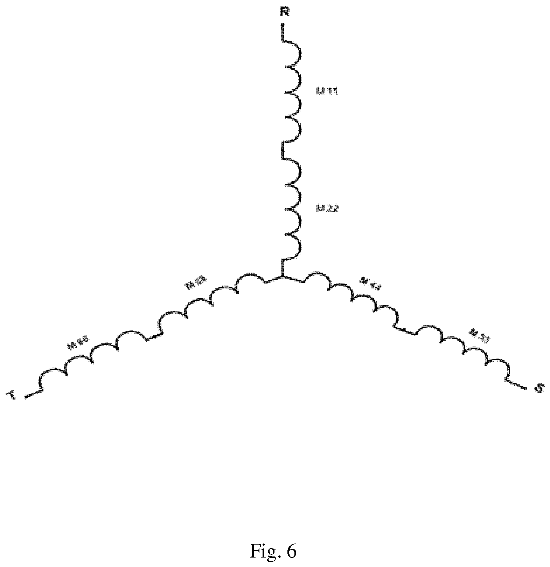

The Switch of electromotor coil to resistive soft start for copper wire cross section (Fig. 6)

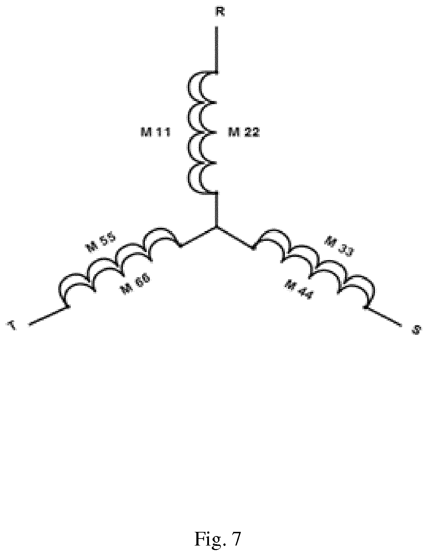

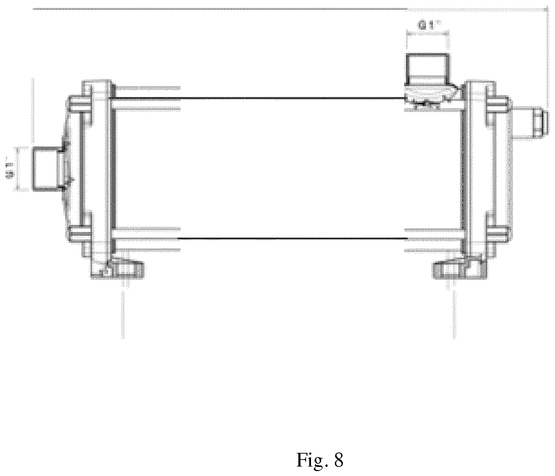

After two seconds, it switches to circuit (Fig. 7) which is a parallel circuit.

## Claims

1. Resistive soft start electromotor comprising a single-phase soft starter circuit which includes:
at least a single-phase switch (S1), configured to connecting and disconnecting the main power source (P), and
at least a fuse (F1) for circuit protection,
at least a timer (KT1) for enforcing basic time for soft start,
a contactor (KM1) which plays the main role in series startup which later switches to parallel mode,
at least a first main coil of electromotor (L1), and a second main coil of electromotor (L2);
wherein the timer (KT1) and contactor (KM1) are arranged to, at the start of the electromotor's movement, enter the second main coil (L2) in series during the start process, then enter the second main coil (L2) in parallel;
**characterized in that** the first and second main coils (L1, L2) have half the wire diameter than a single main coil (M1) thereby increasing coil resistance causing less ampere to pass through the stator during the start process and applying less electrical load on net via electromotor and minimizing probability of stator winding damage during operation due to higher resistance in series coupling.

2. The resistive soft start electromotor of claim 1, in which the electromotor includes stator, rotor (20), copper wire, ball bearing (18, 21), shaft (15) and electromotor terminal, chilling impeller (6) and the chilling impeller protection.

3. The resistive soft start electromotor of claim 1, in which stator that has been specified according to engine power is mounted in aluminum crust.

4. The resistive soft start electromotor of claim 1, in which electromotor shaft (15) is mounted after machining process inside the central rotor hole by hydraulic press.

5. The resistive soft start electromotor of claim 1, in which ball bearings are mounted upon shaft.

6. The resistive soft start electromotor of claim 1, in which the motor door is mounted at the end of motor shell.

7. The resistive soft start electromotor of claim 1, in which four six-millimeter nuts 1.5 centimeters long are employed to fix the motor shell.

8. The resistive soft start electromotor of claim 1, in which four six-millimeter nuts 1.5 centimeters long are employed to fix the motor door.

9. The resistive soft start electromotor of claim 1, which is developed without adding any excessive part and only with changing electromotor coil.

10. The resistive soft start electromotor of claim 1, in which electromotor is arranged to turn on and off consecutively under difficult conditions.

## Patentansprüche

1. Widerstandsanftanlauf-Elektromotor, eine einphasige Sanftanlaufschaltung umfassend, die Folgendes beinhaltet:
mindestens einen einphasigen Schalter (S1), der zum Verbinden und Trennen der Hauptenergiequelle (P) konfiguriert ist, und
mindestens eine Sicherung (F1) zum Schutz der Schaltung,
mindestens einen Zeitgeber (KT1) zum Durchsetzen einer Basiszeit für Sanftanlauf,
ein Schütz (KM1), das die Hauptrolle beim Reihenanlauf spielt, der später auf Parallelbetrieb umschaltet,
mindestens eine erste Hauptspule des Elektromotors (L1) und eine zweite Hauptspule des Elektromotors (L2);
wobei der Zeitgeber (KT1) und das Schütz (KM1) so angeordnet sind, dass sie beim Start der Bewegung des Elektromotors während des Anlaufvorgangs in Reihe in die zweite Hauptspule (L2) eintreten und dann parallel in die zweite Hauptspule (L2) eintreten;
**dadurch gekennzeichnet, dass** die erste und die zweite Hauptspule (L1, L2) den halben Drahtdurchmesser einer einzelnen Hauptspule (M1) aufweisen, wodurch der Spulenwiderstand erhöht wird, wodurch weniger Ampere während des Anlaufvorgangs durch den Stator fließen und weniger elektrische Last auf das Netz über den Elektromotor aufgebracht wird und die Wahrscheinlichkeit einer Beschädigung der Statorwicklung während des Betriebs aufgrund des höheren Widerstands in Reihenkopplung minimiert wird.

2. Widerstandsanftanlauf-Elektromotor nach Anspruch 1, wobei der Elektromotor einen Stator, einen Rotor (20), einen Kupferdraht, ein Kugellager (18, 21), eine Welle (15) und einen Elektromotoranschluss, ein Kühlflügelrad (6) und den Kühlflügelradschutz beinhaltet.

3. Widerstandsanftanlauf-Elektromotor nach Anspruch 1, wobei der gemäß der Motorleistung spezifizierte Stator in einer Aluminiumschale montiert ist.

4. Widerstandsanftanlauf-Elektromotor nach Anspruch 1, wobei die Elektromotorwelle (15) nach dem Bearbeitungsprozess innerhalb des zentralen Rotorlochs durch eine hydraulische Presse montiert wird.

5. Widerstandsanftanlauf-Elektromotor nach Anspruch 1, wobei die Kugellager auf der Welle montiert sind.

6. Widerstandsanftanlauf-Elektromotor nach Anspruch 1, wobei die Motorklappe am Ende des Motorgehäuses montiert ist.

7. Widerstandsanftanlauf-Elektromotor nach Anspruch 1, wobei vier Sechs-Millimeter-Muttern mit einer Länge von 1,5 Zentimetern verwendet werden, um das Motorgehäuse zu befestigen.

8. Widerstandsanftanlauf-Elektromotor nach Anspruch 1, wobei vier Sechs-Millimeter-Muttern mit einer Länge von 1,5 Zentimetern verwendet werden, um die Motorklappe zu befestigen.

9. Widerstandsanftanlauf-Elektromotor nach Anspruch 1, der ohne Hinzufügen eines überschüssigen Teils und nur mit wechselnder Elektromotorspule entwickelt wurde.

10. Widerstandsanftanlauf-Elektromotor nach Anspruch 1, wobei der Elektromotor so angeordnet ist, dass er unter schwierigen Bedingungen nacheinander ein- und ausschaltet.

## Revendications

1. Électromoteur à démarrage progressif résistif comprenant un circuit de démarreur progressif monophasé qui comprend :
au moins un commutateur monophasé (S1), conçu pour connecter et déconnecter la source de puissance principale (P), et
au moins un fusible (F1) destiné à la protection de circuit, au moins une minuterie (KT1) destinée à appliquer le temps de base en vue du démarrage progressif,
un contacteur (KM1) qui joue le rôle principal dans le démarrage en série qui commute ensuite en mode parallèle,
au moins une première bobine principale d'électromoteur (L1), et une seconde bobine principale d'électromoteur (L2) ;
ladite minuterie (KT1) et ledit contacteur (KM1) étant agencés pour, au début du mouvement de l'électromoteur, entrer la seconde bobine principale (L2) en série durant le processus de démarrage, puis entrer la seconde bobine principale (L2) en parallèle ;
**caractérisé en ce que** les première et seconde bobines principales (L1, L2) possèdent un diamètre de fil métallique deux fois plus petit qu'une seule bobine principale (M1) augmentant ainsi la résistance de bobine entraînant le passage de moins d'ampères à travers le stator durant le processus de démarrage et appliquant moins de charge électrique sur le réseau par l'intermédiaire d'un électromoteur et minimisant la probabilité d'endommagement de l'enroulement de stator durant le fonctionnement en raison d'une résistance plus élevée dans le couplage en série.

2. Électromoteur à démarrage progressif résistif selon la revendication 1, dans lequel l'électromoteur comprend un stator, un rotor (20), un fil métallique de cuivre, un roulement à billes (18, 21), un arbre (15) et une borne d'électromoteur, une turbine de refroidissement (6) et la protection de la turbine de refroidissement.

3. Électromoteur à démarrage progressif résistif selon la revendication 1, dans lequel le stator qui a été spécifié selon la puissance de moteur est monté dans une croûte d'aluminium.

4. Électromoteur à démarrage progressif résistif selon la revendication 1, dans lequel l'arbre d'électromoteur (15) est monté après un processus d'usinage à l'intérieur du trou de rotor central par une presse hydraulique.

5. Électromoteur à démarrage progressif résistif selon la revendication 1, dans lequel des roulements à billes sont montés sur l'arbre.

6. Électromoteur à démarrage progressif résistif selon la revendication 1, dans lequel la porte de moteur est montée au niveau de l'extrémité d'enveloppe de moteur.

7. Électromoteur à démarrage progressif résistif selon la revendication 1, dans lequel quatre écrous de six millimètres de 1,5 centimètres de long sont utilisés pour fixer l'enveloppe de moteur.

8. Électromoteur à démarrage progressif résistif selon la revendication 1, dans lequel quatre écrous de six millimètres de 1,5 centimètres de long sont utilisés pour fixer la porte de moteur.

9. Électromoteur à démarrage progressif résistif selon la revendication 1, qui est développé sans ajout de pièce excessive et uniquement en changeant la bobine de moteur électrique.

10. Électromoteur à démarrage progressif résistif selon la revendication 1, dans lequel l'électromoteur est agencé pour s'allumer et s'éteindre consécutivement dans des conditions difficiles.
